# EUROPEAN PATENT SPECIFICATION

(11) **EP 3 415 891 B1**
(45) Date of publication and mention of the grant of the patent: **25.11.2020**
(21) Application number: 18169558.6
(22) Date of filing: 26.04.2018
(51) Int. Cl.: G01M 13/00, G01H 17/00, G05B 23/02

(54) **METHOD OF FAULT PREDICTION OF A CYCLICALLY MOVING MACHINE COMPONENT**
VERFAHREN ZUR FEHLERVORHERSAGE EINER SICH ZYKLISCH BEWEGENDEN MASCHINENKOMPONENTE
PROCÉDÉ DE PRÉDICTION DE DÉFAILLANCE D'UN COMPOSANT DE MACHINE EN MOUVEMENT CYCLIQUE

(30) Priority: 12.06.2017 EP 17175556
(43) Date of publication of application: 19.12.2018
(73) Proprietor: Tetra Laval Holdings & Finance S.A., 1009 Pully (CH)
(72) Inventor: COCCONCELLI, Marco, 41200 REGGIO EMILIA (IT); CAPELLI, Luca, 42017 Novellara (IT); BORGHI, Davide, 41121 Modena (IT)
(74) Representative: Tetra Pak - Patent Attorneys SE

(56) References cited:
- US-A1- 2012 272 736
- US-B1- 6 370 957
- US-B1- 6 392 584

## Description

### Technical Field

The present invention generally relates to the field of condition monitoring. More particularly, the present invention relates to a method of fault prediction of a cyclically moving machine component, a related computer program product and an apparatus for predicting fault in a cyclically moving machine component such as bearings, belts, or motors, employed in systems such as filling machines or related systems for producing sealed packages.

### Background

Condition monitoring of machine components such as bearings, belts, motors, or any other of the component in production lines, such as in the manufacturing of sealed packages in a filling machine or related systems, is critical for ensuring a desired functionality over a period of time and fault prediction. Monitoring distortions in the movements of such components, such as vibrations in cyclically moving components in those systems, is one essential part in achieving the desired functionality control and prevent wear-related breakdown. Such maintenance strategy is mainly possible thanks to the fact that once e.g. a bearing approaches failure, it becomes noisy and vibrates as a warning sign of the impending breakdown, and if this sign is detected timely it gives the operator a time frame to plan a maintenance activity and substitute the bearing without impacting production time. Distortion analysis of e.g. vibrations is an important part of industrial predictive maintenance programs so that wear and damages in the bearings can be discovered and repaired before the machine breaks down, thus reducing operating and maintenance costs. Empirical evaluation of the vibration level of a bearing is an error-prone activity that may lead to significantly underestimate or overestimate the remaining lifetime of the component, and also to mistake for a bearing damage a noise that is due to a completely different cause (e.g. a shaft imbalance). Previous solutions that aim to characterize bearing faults include frequency analysis, where characteristic frequency signatures are extracted from the vibration signal. Besides from being complex to implement, solutions based on frequency analysis are not always accurate and makes various assumptions with regards to the model used for the calculations. In particular, it is typically assumed that there is no slip during the relative motion of the bearing elements; that there is a localized damage on the bearing; that the motor to which the bearing is attached to rotates at a constant speed; and during the motor operation, the damage causes a series of short-duration impacts, that generate a train of spikes in the frequency spectrum of the vibration signal with a certain periodicity; and that there is a frequency band where the signal-to-noise ratio is such that the train of impulses is detectable. If these conditions are not verified, the train of peaks may be smeared so that it is not recognizable anymore, or can be hidden among other kinds of noise. The assumption of constant rotation speed of the servomotors is severe limitation in the field of automatic machines, where usually a number of servomotors are employed as electric cams and operated at a variable speed in order to obtain variable speed profiles of the actuated elements. Methods are employed to accommodate for variable speeds, but such solutions can also be complex to implement and also associated with other limitations and undesirable assumptions.

Further background art for predicting machine failure can be found in US 6 370 597 B1 disclosing a *method for trending of mean values versus time and in* US 6 392 584 B1 *disclosing a method for* predetermining number of times in a row or for a predetermined percentage of data sets out of some given total number evaluated per run or per time interval.

Hence, an improved condition monitoring would be advantageous and in particular allowing for avoiding more of the above-mentioned problems and compromises, including providing a less complex method of fault prediction, having short execution time and thereby enabling analysis on-the-fly, thereby allowing for a less time-consuming and robust trouble-shooting of a cyclically moving machine component.

### Summary

Accordingly, examples of the present invention preferably seek to mitigate, alleviate or eliminate one or more deficiencies, disadvantages or issues in the art, such as the above-identified, singly or in any combination by providing a device according to the appended patent claims.

According to a first aspect a method of fault prediction of a cyclically moving machine component is provided, wherein each cycle of a plurality of cycles of a motion of the component generates a data distribution of values of measurable movement characteristics during a duration of each cycle. The method comprises, for each cycle; determining said data distribution of the movement characteristics; calculating a measure of central tendency of the values in the data distribution; calculating a quantified measure of a shape of the data distribution over the duration of each cycle; associating the measure of central tendency with said quantified measure of the shape as a coupled set of condition parameters; determining a degree of dispersion of a plurality of coupled sets of condition parameters associated with a plurality of cycles of the cyclically moving component; and comparing the degree of dispersion with a dispersion threshold value, or determining a trend of the degree of dispersion over time, for said fault prediction.

According to a second aspect a computer program product comprising instructions which, when the program is executed by a computer, cause the computer to carry out the steps of the method according to the first aspect.

According to a third aspect an apparatus configured to predict fault in a cyclically moving component is disclosed, wherein each cycle of a plurality of cycles of a motion of the component generates a data distribution of values of measurable movement characteristics during a duration of each cycle. The apparatus comprises a processing unit configured to, for each cycle; determine said data distribution of the movement characteristics; calculate a measure of central tendency of the values in the data distribution; calculate a quantified measure of a shape of the data distribution over the duration of each cycle; associate the measure of central tendency with said quantified measure as a coupled set of condition parameters; determine a degree of dispersion of a plurality of coupled sets of condition parameters associated with a plurality of cycles of the cyclically moving component; and compare the degree of dispersion with a dispersion threshold value, or determine a trend of the degree of dispersion over time, for said fault prediction.

Further examples of the invention are defined in the dependent claims, wherein features for the second and third aspects of the disclosure are as for the first aspect mutatis mutandis.

Some examples of the disclosure provide for an improved method for predicting fault in a machine component.

Some examples of the disclosure provide for facilitated prediction of the life-time of a machine component.

Some examples of the disclosure provide for a more predictable and efficient maintenance schedule of a machine component.

Some examples of the disclosure provide for a method of fault prediction, having short execution time and thereby enabling analysis on-the-fly.

Some examples of the disclosure provide for avoiding faulty cyclically moving machine components such as bearings, belts, motors.

Some examples of the disclosure provide for a more efficient method of evaluating the quality of cyclically moving machine components.

Some examples of the disclosure provide for less time-consuming trouble-shooting of cyclically moving machine components.

Some examples of the disclosure provide for improved characterization of measurable movement characteristics of a cyclically moving machine component such as vibration characteristics.

Some examples of the disclosure provide for improved condition monitoring in a machine such in a filling machine, having cyclically moving machine components.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which examples of the invention are capable of will be apparent and elucidated from the following description of examples of the present invention, reference being made to the accompanying drawings, in which;
Fig. 1 is a diagram illustrating a data distribution of movement characteristics of a cyclically moving machine component, where the amplitude of a vibration signal is being plotted over the duration of one cycle;
Fig. 2a is a diagram of coupled sets of condition parameters, where each set, i.e. data point, is determined as a measure of a central tendency of the values of the data distribution in Fig. 1 versus a quantified measure of a shape of the data distribution, according to one example of the disclosure, for two different times;
Fig. 2b is a magnified view of the coupled sets of condition parameters in Fig. 2a at time t₂;
Figs. 3a-b are diagrams of a radius of a circle circumflexing the data points of the sets of condition parameters in Figs. 2a-b versus the percentage of data points being contained within the aforementioned circle, for two different machine components;
Figs. 4a-b are diagrams of a radius of a circle circumflexing the data points of the sets of condition parameters in Figs. 2a-b versus the percentage of data points being contained within the aforementioned circle, for two different machine components;
Fig. 5 is a flowchart of a method of fault prediction of a cyclically moving machine component according to one example of the disclosure;
Fig. 6 is a flowchart of a method of fault prediction of a cyclically moving machine component according to one example of the disclosure; and
Fig. 7 is a schematic illustration of an apparatus configured to predict fault in a cyclically moving component according to one example of the disclosure.

### Detailed Description

Specific examples of the invention will now be described with reference to the accompanying drawings. This invention may, however, be embodied in many different forms and should not be construed as limited to the examples set forth herein; rather, these examples are provided so that this disclosure will be thorough and complete, and will fully convey the scope of the invention to those skilled in the art. The terminology used in the detailed description of the examples illustrated in the accompanying drawings is not intended to be limiting of the invention. In the drawings, like numbers refer to like elements.

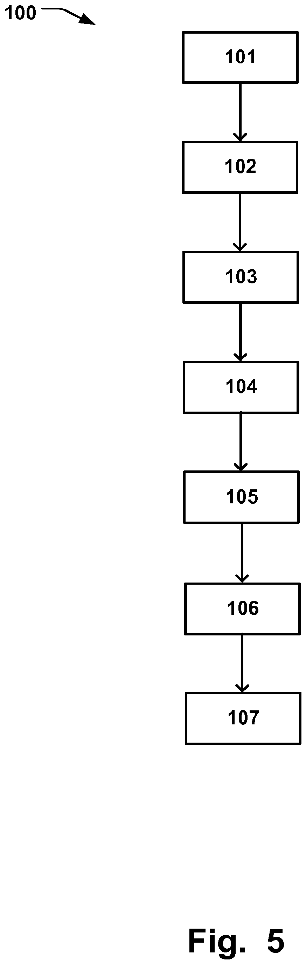

Fig. 5 illustrates a flow chart of a method 100 of fault prediction of a cyclically moving machine component. The order in which the steps of the method 100 are described and illustrated should not be construed as limiting and it is conceivable that the steps can be performed in varying order.

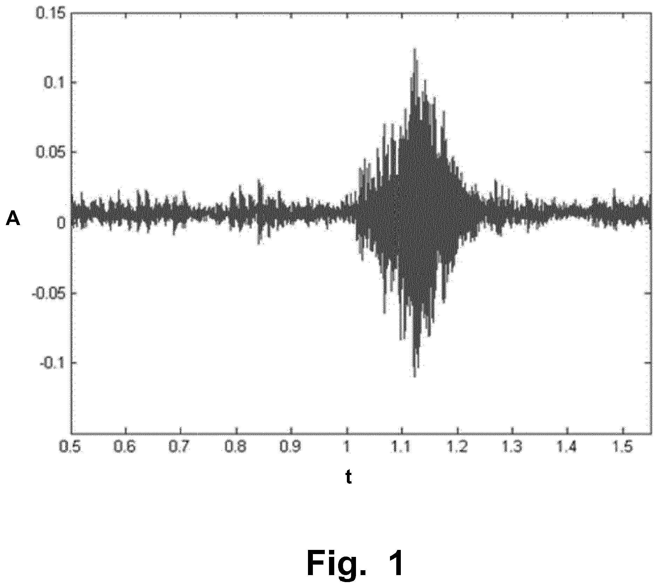

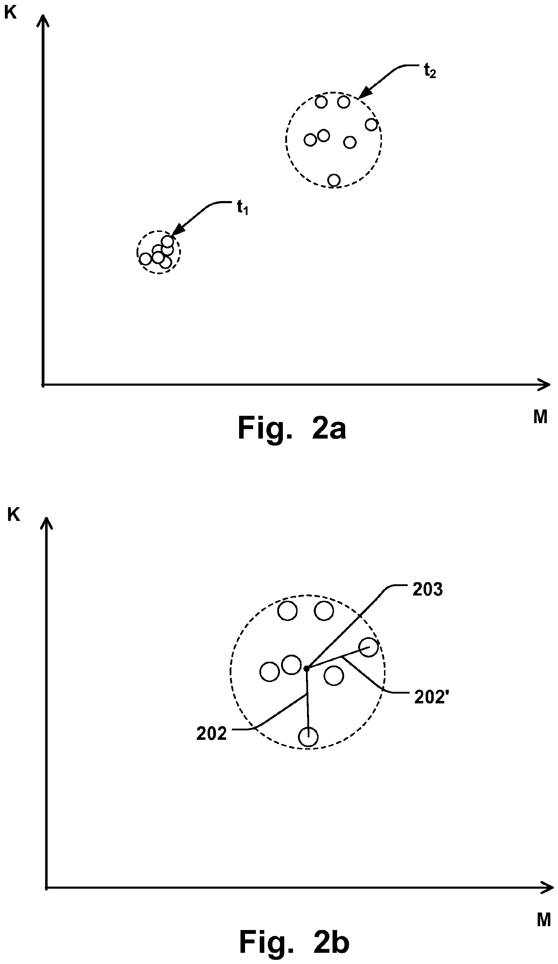

A method 100 of fault prediction of a cyclically moving machine component is thus provided. In this example, each cycle of a plurality of cycles of a motion of the component generates a data distribution of values of measurable movement characteristics during a duration of each cycle. Fig. 1 illustrates an example of values of measurable movement characteristics obtained over one cycle of the machine component. The data distribution in Fig. 1 shows the amplitude of a movement, such as a vibrational movement, as function of time, i.e. over the duration of one cycle. It is conceivable that various other measurable movement characteristics of the cycle can be determined for the purposes of carrying out the method 100, such as values of torque or any other force, speed, or acceleration describing the movement of the machine component during one cycle. For each cycle, the method 100 comprises determining 101 the data distribution of the movement characteristics, i.e. retrieving the data such as illustrated in the example of Fig. 1, e.g. by employing various types of sensors configured to detect the mentioned movement characteristics. The method 100 comprises calculating 102 a measure of central tendency of the values in the data distribution. The measure of central tendency should be construed according to the normal meaning of the term within statistical theory, i.e. as a central or typical value for a probability distribution, e.g. for the data distribution illustrated in the example of Fig. 1. The method 100 further comprises calculating 103 a quantified measure of a shape of the data distribution over the duration of each cycle. Also, the shape of the data distribution should be construed according to the normal meaning of the term within statistical theory, i.e. describing the shape of the curvature of the data distribution in Fig. 1, such as the characteristics of the tails of such data distribution, e.g. how wide or thin the tails of the distribution are, which is influenced by the number of outliers of the data points, i.e. the number of data points being far removed from the main distribution around the center of the data distribution. The method 100 comprises associating 104 the measure of central tendency with said quantified measure of the shape as a coupled set of condition parameters. I.e. for each cycle, a set of condition parameters is determined, where each set is a pair of data points comprising the measure of central tendency and the quantified measure of the shape of the data distribution. Figs. 2a-b are schematic diagrams where each data point (small circles with solid lines) correspond to a coupled set of condition parameters. The quantified measure of the shape of the data distribution is given on the vertical axis (K), and the measure of central tendency is given on the horizontal axis (M). The method 100 comprises determining 105 a degree of dispersion of a plurality of coupled sets of condition parameters associated with a plurality of cycles of the cyclically moving component. The dispersion is indicative of how far each of the coupled sets of condition parameters are removed from eachother. In the example of Fig. 2a, the plurality of coupled sets of condition parameters have been determined for two points in time, t₁ and t₂. At time t₂ the degree of dispersion is larger than at time t₁. The method 100 comprises comparing 106 the degree of dispersion, e.g. at time t₂, with a dispersion threshold value for said fault prediction. An exceeded threshold value can thus be indicative of increased wear of the cyclically moving machine component. Alternatively, a trend of the degree of dispersion over time can be determined 107, for said fault prediction. For example, a trend of increased dispersion, going from t₁ to t₂, can be indicative of increased wear of the cyclically moving machine component.

Thus, by associating 104 the measure of central tendency with the quantified measure of the shape as a coupled set of condition parameters, and determining the degree of dispersion thereof for a plurality of cycles, a facilitated and reliable indication of increased wear, or a generally faulty machine component, can be obtained, without the need for complex frequency analysis of the movement characteristics of the component. The various assumptions made in such traditional frequency analysis are thus not needed, and the method of fault prediction described in the present disclosure can be employed to achieve a reliable condition monitoring in a wide variety of applications. The method 100 provides for a method of fault prediction having short execution time and thereby enabling analysis on-the-fly and generally a less time-consuming trouble-shooting of cyclically moving machine components such as bearings, belts, motors and related components thereof. Such improved fault prediction may be particularly advantageous in filling machines, and related components thereof, in high-speed production lines where condition monitoring is critical for maintaining a high throughput.

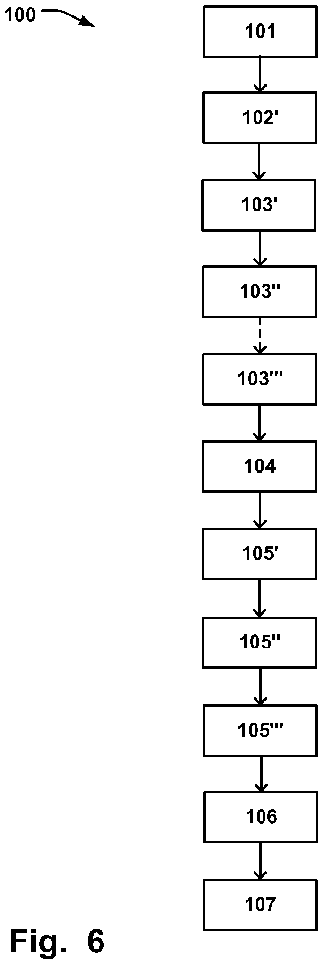

Fig. 6 illustrates a further flow chart of a method 100 of fault prediction of a cyclically moving machine component. The order in which the steps of the method 100 are described and illustrated should not be construed as limiting and it is conceivable that the steps can be performed in varying order.

Calculating 102 the measure of central tendency the values in the data distribution may comprise calculating 102' a mean value, such as an arithmetic mean, and/or a geometric mean, and/or a harmonic mean, and/or a generalized mean such as a quadratic mean (RMS), and/or other measures of a central tendency of the data distribution such as a median value or a mode value, and/or differently weighted and/or truncated variants thereof. The method 100 may be optimized to various applications depending on the particular measure of central tendency employed. An efficient condition monitoring and fault prediction can thereby be achieved for a range of applications and movement characteristics.

Calculating 103 a quantified measure of the shape of the data distribution may comprise calculating 103' a measure of a distribution of the measured movement characteristics around the measure of central tendency. Thus, the shape of the data distribution around the measure of central tendency is determined, which subsequently is associated with the latter for providing the set of coupled condition parameters for the particular cycle.

Calculating a measure of the distribution of the measured movement characteristics around the measure of central tendency may comprise calculating 103" a measure of a deviation from a standard normal distribution. This will provide a measure of how the shape of the data distribution is different from a standard normal distribution, e.g. if the tails of the distribution are thicker - i.e. more concentrated towards the measure of central tendency - or thinner tails - i.e. in a more even "low-profiled" distribution with a greater spread around the measure of central tendency. The shape of the data distribution can thus be considered as a measure that the describes the shape of the distribution's tails in relation to its overall shape.

Calculating a quantified measure of a shape of the data distribution may comprise calculating 103'" a kurtosis value of the data distribution. Thus, kurtosis is such a measure of the shape of the data distribution. There are typically three categories of kurtosis that can be displayed by a set of data. All measures of kurtosis can be compared against a standard normal distribution, or bell curve. The first category of kurtosis is a mesokurtic distribution. This type of kurtosis is the most similar to a standard normal distribution in that it also resembles a bell curve. However, a graph that is mesokurtic has fatter tails than a standard normal distribution and has a slightly lower peak. This type of kurtosis is considered normally distributed but is not a standard normal distribution. The second category is a leptokurtic distribution. Any distribution that is leptokurtic displays greater kurtosis than a mesokurtic distribution. Characteristics of this type of distribution is one with thicker tails and a substantially thin and tall peak. The other type of distribution is a platykurtic distribution. These types of distributions have slender tails and a peak that's smaller than a mesokurtic distribution. Other measures of the shape of the data distribution may be determined, such as the skewness describing asymmetry from the normal distribution in a set of data. The method 100 may be thus optimized to various applications depending on the particular measure of the shape of the data distribution employed.

The movement characteristics may comprises vibration data of the cyclically moving component, but as mentioned, the movement characteristics may comprises other types or combinations of data such as speed, acceleration, torque etc.

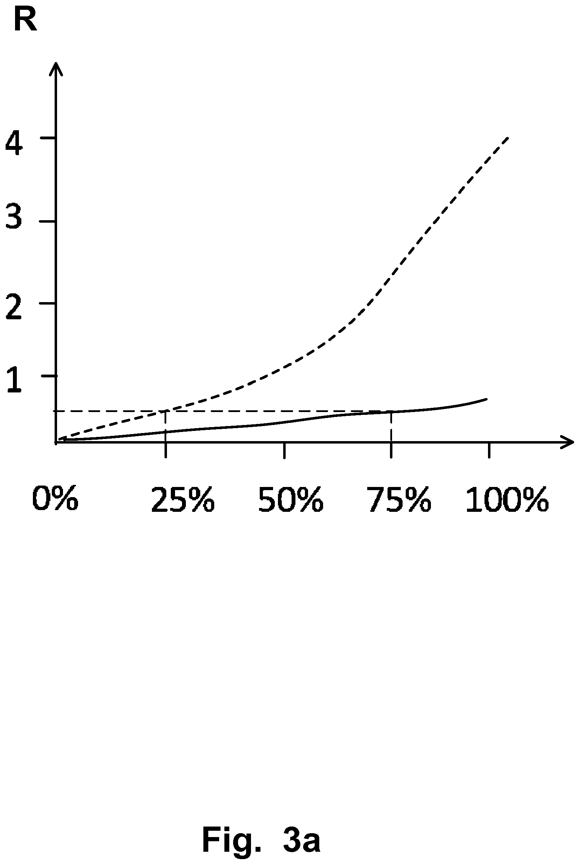

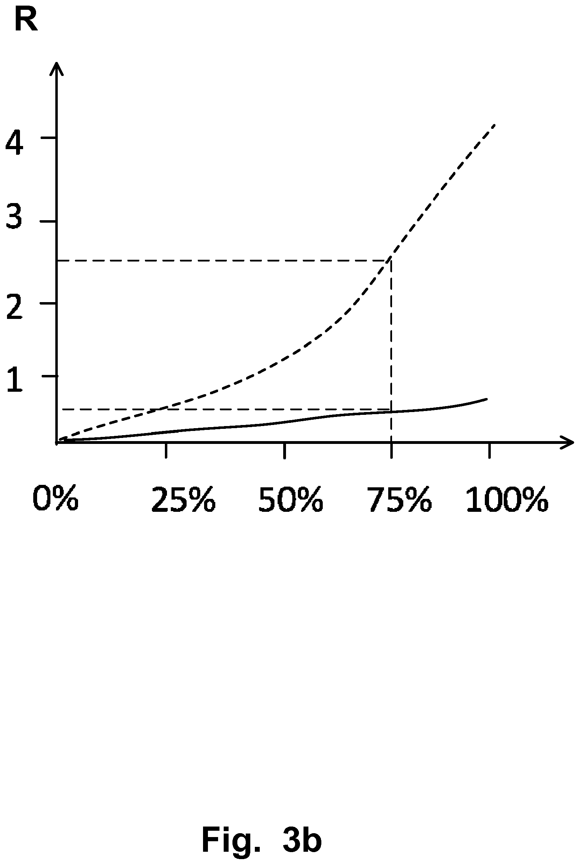

Determining 105 a degree of dispersion of the plurality of coupled sets of condition parameters may comprise determining 105' a fraction of the plurality of coupled sets of condition parameters being contained within a set threshold dispersion. The threshold dispersion may be illustrated as a circle, having a particular radius (R), in which a predetermined amount of the coupled sets of condition parameters (i.e. the data points in Figs. 2a-b) should be contained. In the example of Fig. 2a, 100% of the data points are contained within the respective circles at times t₁ and t₂, since the radius has been increased at t₂ to accommodate the increased degree of dispersion. If the radius is kept fixed, however, over time, the fraction of data points contained within the radius will decrease. In the example of Fig. 3a, the radius (R) is illustrated on the vertical axis, and the fraction of data points being contained within the respective radiuses is illustrated on the horizontal axis, for two different components (solid and dashed line, respectively). For example, 75% of the data points of a healthy component (the solid line) are contained within a radius of approximately 0.5, while only 25% of the data points of a faulty component (the dashed lines) are contained within this radius (R). This is thus indicative of an increased dispersion of the plurality of coupled sets of condition parameters for the faulty component. It is also conceivable that a single component is illustrated in Fig. 3a, but at the two different points in time (t₁, t₂). Thus, as time progress from t₁ to t₂, the healthy component becomes faulty with a significant reduction in the fraction of data points (coupled sets of condition parameters) being contained within the radius at 0.5. An acceptable range in the fraction of the data points to be contained within the defined radius may thus be set. Alternatively, a fixed fraction of data points to be contained may be defined, such as illustrated in Fig. 3b, where the respective radiuses fall within a range. In this example, 75% of the data points fall within a range of the radius (R) of between 0.5 and 2.5. An acceptable range in the radius may thus be defined.

Determining a degree of dispersion of the plurality of coupled sets of condition parameters may comprise determining 105" the distances 202, 202', between a center 203 of a distribution of the plurality of coupled sets of condition parameters and each coupled set of condition parameters. Fig. 2b schematically illustrates how the distances 202, 202', to two different data points, i.e. coupled sets of condition parameters, have been determined with respect to a determined center 203 of the distribution. The distance may thus be an Euclidian distance between the aforementioned points. It is conceivable however that other measures of the dispersion of the data points may be utilized.

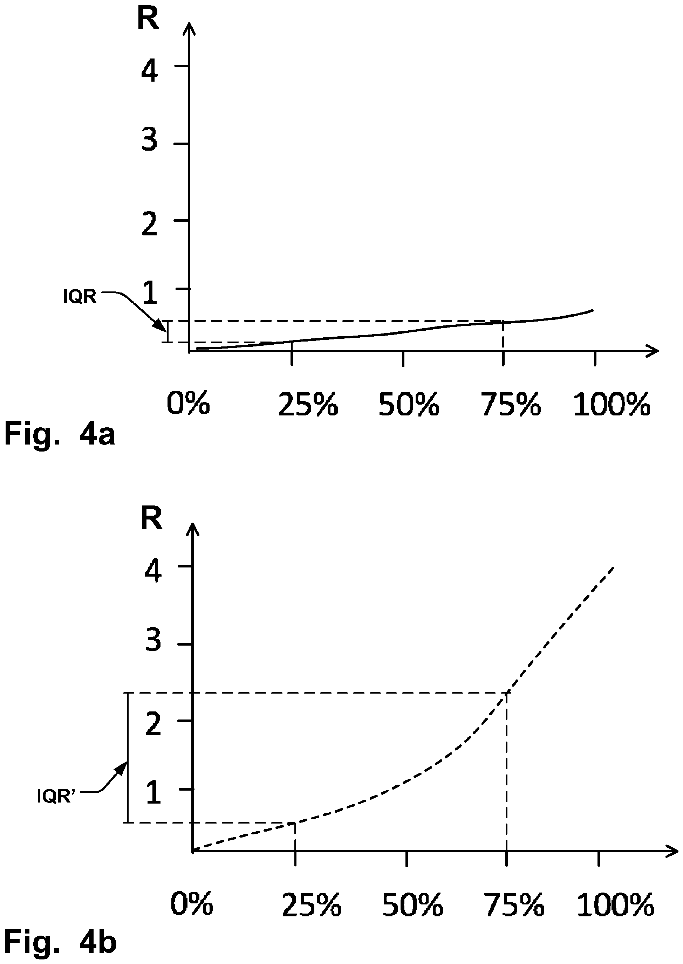

The degree of dispersion may be determined by calculating 105'" the spread of the interquartile range (IQR, IQR') of the coupled sets of condition parameters. Figs. 4a-b illustrate an increase in the interquartile range, i.e. a spread in the range of radiuses in which 25-75% of the data points are contained. Thus, as the dispersion increased in Fig. 4b, the interquartile range IQR' is increased, providing for an efficient measure of the dispersion of the coupled sets of condition parameters.

A computer program product is provided comprising instructions which, when the program is executed by a computer, cause the computer to carry out the steps of the method 100 as described above in relation to Figs. 1 - 6.

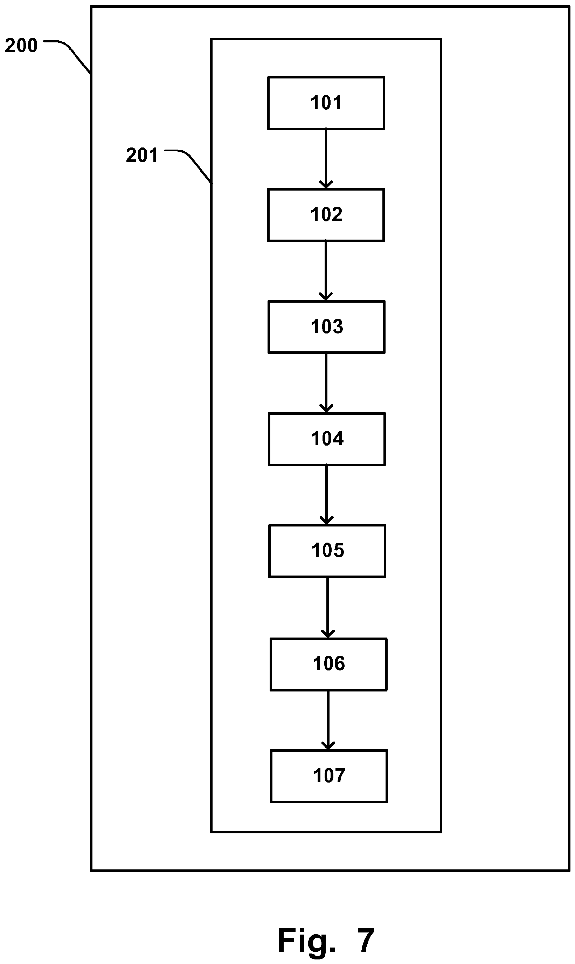

An apparatus 200 configured to predict fault in a cyclically moving component is also provided. As mentioned, each cycle of a plurality of cycles of a motion of the component generates a data distribution of values of measurable movement characteristics during a duration of each cycle. The apparatus comprises a processing unit 201, being schematically illustrated in Fig. 7, which is configured to, for each cycle; determine 101 said data distribution of the movement characteristics; calculate 102 a measure of central tendency of the values in the data distribution; calculate 103 a quantified measure of a shape of the data distribution over the duration of each cycle; associate 104 the measure of central tendency with said quantified measure as a coupled set of condition parameters; determine 105 a degree of dispersion of a plurality of coupled sets of condition parameters associated with a plurality of cycles of the cyclically moving component; and compare 106 the degree of dispersion with a dispersion threshold value, or determine 107 a trend of the degree of dispersion over time, for said fault prediction. The apparatus 200 thus provides for the advantageous benefits as described above in relation to the method 100 with reference to Figs. 1 - 6. I.e. the apparatus 200 provides for a facilitated and reliable condition monitoring and fault prediction with indication of increased wear, or generally faulty machine components, without the need for complex frequency analysis of the movement characteristics of the components.

The processing unit 201 may be configured to calculate the measure of central tendency of the values in the data distribution by calculating 102' a mean value, such as an arithmetic mean, and/or a geometric mean, and/or a harmonic mean, and/or a generalized mean, and/or other measures of a central tendency of the data distribution such as a median value or a mode value.

The processing unit 201 may be configured to calculate a quantified measure of a shape of said data distribution by calculating 103'" a kurtosis value of said data distribution.

The processing unit 201 may be configured to determine the degree of dispersion of the plurality of coupled sets of condition parameters by calculating 105' a fraction of the plurality of coupled sets of condition parameters being contained within a set threshold dispersion.

The processing unit 201 may be configured to determine a degree of dispersion of the plurality of coupled sets of condition parameters by calculating 105" the distances 202, 202' between a center 203 of a distribution of the plurality of coupled sets of condition parameters and each coupled set of condition parameters.

The present invention has been described above with reference to specific examples. However, other examples than the above described are equally possible within the scope of the invention. The different features and steps of the invention may be combined in other combinations than those described. The scope of the invention is only limited by the appended patent claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

## Claims

1. A method (100) of fault prediction of a cyclically moving machine component, wherein each cycle of a plurality of cycles of a motion of the component generates a data distribution of values of measurable movement characteristics during a duration of each cycle, the method comprising, for each cycle;
determining (101) said data distribution of the movement characteristics, calculating (102) a measure of central tendency of the values in the data distribution,
calculating (103) a quantified measure of a shape of the data distribution over the duration of each cycle,
associating (104) the measure of central tendency with said quantified measure of the shape as a coupled set of condition parameters, the method being **characterized by** the further steps of determining (105) a degree of dispersion of a plurality of coupled sets of condition parameters associated with the plurality of cycles of a motion of the cyclically moving component, and
comparing (106) the degree of dispersion with a dispersion threshold value, or determining (107) a trend of the degree of dispersion over time, for said fault prediction.

2. Method according to claim 1, wherein calculating a measure of central tendency the values in the data distribution comprises
calculating (102') a mean value, such as an arithmetic mean, and/or a geometric mean, and/or a harmonic mean, and/or a generalized mean, and/or other measures of a central tendency of the data distribution such as a median value or a mode value.

3. Method according to claim 1 or 2, wherein calculating a quantified measure of a shape of said data distribution comprises
calculating (103') a measure of a distribution of the measured movement characteristics around said measure of central tendency.

4. Method according to claim 3, wherein calculating a measure of a distribution of the measured movement characteristics around said measure of central tendency comprises
calculating (103") a measure of a deviation from a standard normal distribution.

5. Method according to any of claims 1 - 4, wherein calculating a quantified measure of a shape of said data distribution comprises
calculating (103"') a kurtosis value of said data distribution.

6. Method according to any of claims 1 - 5, wherein the movement characteristics comprises vibration data of the cyclically moving component.

7. Method according to any of claims 1 - 6, wherein determining a degree of dispersion of the plurality of coupled sets of condition parameters comprises
determining (105') a fraction of the plurality of coupled sets of condition parameters being contained within a set threshold dispersion.

8. Method according to any of claims 1 - 7, wherein determining a degree of dispersion of the plurality of coupled sets of condition parameters comprises
determining (105") the distances (202, 202') between a center (203) of a distribution of the plurality of coupled sets of condition parameters and each coupled set of condition parameters.

9. Method according to any of claims 1 - 8, wherein the degree of dispersion is determined by calculating (105"') the spread of the interquartile range (IQR, IQR') of the coupled sets of condition parameters.

10. A computer program product comprising instructions which, when the program is executed by a computer, cause the computer to carry out the steps of the method according to any of claims 1 - 9.

11. An apparatus (200) configured to predict fault in a cyclically moving component, wherein each cycle of a plurality of cycles of a motion of the component generates a data distribution of values of measurable movement characteristics during a duration of each cycle, the apparatus comprising a processing unit (201) configured to, for each cycle;
determine (101) said data distribution of the movement characteristics,
calculate (102) a measure of central tendency of the values in the data distribution,
calculate (103) a quantified measure of a shape of the data distribution over the duration of each cycle,
associate (104) the measure of central tendency with said quantified measure as a coupled set of condition parameters, the system being **characterized by** being further configured to determine (105) a degree of dispersion of a plurality of coupled sets of condition parameters associated with a plurality of cycles of the cyclically moving component, and
compare (106) the degree of dispersion with a dispersion threshold value, or determine (107) a trend of the degree of dispersion over time, for said fault prediction.

12. Apparatus according to claim 11, wherein said processing unit is configured to calculate the measure of central tendency of the values in the data distribution by calculating (102') a mean value, such as an arithmetic mean, and/or a geometric mean, and/or a harmonic mean, and/or a generalized mean, and/or other measures of a central tendency of the data distribution such as a median value or a mode value.

13. Apparatus according to claim 11 or 12, wherein said processing unit is configured to calculate a quantified measure of a shape of said data distribution by calculating (103"') a kurtosis value of said data distribution.

14. Apparatus according to any of claims 11 - 13, wherein said processing unit is configured to determine the degree of dispersion of the plurality of coupled sets of condition parameters by calculating (105') a fraction of the plurality of coupled sets of condition parameters being contained within a set threshold dispersion.

15. Apparatus according to any of claims 11 - 14, wherein said processing unit is configured to determine a degree of dispersion of the plurality of coupled sets of condition parameters by calculating (105") the distances (202, 202') between a center (203) of a distribution of the plurality of coupled sets of condition parameters and each coupled set of condition parameters.

## Patentansprüche

1. Verfahren (100) zur Fehlervorhersage einer sich zyklisch bewegenden Maschinenkomponente, wobei jeder Zyklus einer Mehrzahl von Zyklen einer Bewegung der Komponente eine Datenverteilung von Werten messbarer Bewegungscharakteristiken während einer Dauer jedes Zyklus erzeugt, wobei das Verfahren für jeden Zyklus umfasst
Bestimmen (101) der Datenverteilung der Bewegungscharakteristiken,
Berechnen (102) eines Maßes für die zentrale Tendenz der Werte in der Datenverteilung,
Berechnen (103) eines quantifizierten Maßes für die Form der Datenverteilung über die Dauer eines jeden Zyklus, Zuordnen (104) des Maßes der zentralen Tendenz zu dem quantifizierten Maß der Form als einem gekoppelten Satz von Bedingungsparametern,
wobei das Verfahren durch die folgenden weiteren Schritte gekennzeichnet ist
Bestimmen (105) eines Dispersionsgrades einer Mehrzahl von gekoppelten Sätzen von Bedingungsparametern, die der Mehrzahl von Zyklen einer Bewegung der sich zyklisch bewegenden Komponente zugeordnet sind, und
Vergleichen (106) des Dispersionsgrades mit einem Dispersionsschwellenwert oder Bestimmen (107) eines Trends des Dispersionsgrades über Zeit für diese Fehlervorhersage.

2. Verfahren nach Anspruch 1, wobei das Berechnen eines Maßes der zentralen Tendenz der Werte in der Datenverteilung umfasst
Berechnen (102') eines Mittelwertes, wie beispielsweise eines arithmetischen Mittelwertes und/oder eines geometrischen Mittelwertes und/oder eines harmonischen Mittelwertes und/oder eines verallgemeinerten Mittelwertes und/oder anderer Maße einer zentralen Tendenz der Datenverteilung, wie beispielsweise eines Durchschnittswertes oder eines Moduswertes.

3. Verfahren nach Anspruch 1 oder 2, wobei das Berechnen eines quantifizierten Maßes einer Form der Datenverteilung umfasst
Berechnen (103') eines Maßes für die Verteilung der gemessenen Bewegungscharakteristiken um dieses Maß der zentralen Tendenz herum.

4. Verfahren nach Anspruch 3, wobei das Berechnen eines Maßes für die Verteilung der gemessenen Bewegungscharakteristiken um das Maß der zentralen Tendenz herum umfasst
Berechnen (103") eines Maßes für eine Abweichung von einer Standardnormalverteilung.

5. Verfahren nach einem der Ansprüche 1 bis 4, wobei das Berechnen eines quantifizierten Maßes einer Form der Datenverteilung umfasst
Berechnen (103"') eines Wölbungswertes dieser Datenverteilung.

6. Verfahren nach einem der Ansprüche 1 bis 5, wobei die Bewegungscharakteristiken Vibrationsdaten der sich zyklisch bewegenden Komponente umfasst.

7. Verfahren nach einem der Ansprüche 1 bis 6, wobei das Bestimmen eines Dispersionsgrades der Mehrzahl von gekoppelten Sätzen von Bedingungsparametern das Bestimmen (105') eines Bruchteils der Mehrzahl von gekoppelten Sätzen von Bedingungsparametern umfasst, die innerhalb einer eingestellten Schwellendispersion enthalten sind.

8. Verfahren nach einem der Ansprüche 1 bis 7, wobei das Bestimmen eines Dispersionsgrades der Mehrzahl von gekoppelten Sätzen von Bedingungsparametern das Bestimmen (105") der Abstände (202, 202') zwischen einem Zentrum (203) einer Verteilung der Mehrzahl von gekoppelten Sätzen von Bedingungsparametern und jedem gekoppelten Satz von Bedingungsparametern umfasst.

9. Verfahren nach einem der Ansprüche 1 bis 8, wobei der Dispersionsgrad durch Berechnen (105''') der Streuung des Interquartilbereichs (IQR, IQR') der gekoppelten Sätze von Bedingungsparametern bestimmt wird.

10. Computerprogrammprodukt, umfassend Anleitungen, die, wenn das Programm von einem Computer ausgeführt wird, den Computer veranlassen, das Verfahren nach einem der Ansprüche 1 bis 9 durchzuführen.

11. Vorrichtung (200), die dazu ausgelegt ist, Fehler in einer sich zyklisch bewegenden Komponente vorherzusagen, wobei jeder Zyklus einer Mehrzahl von Zyklen einer Bewegung der Komponente eine Datenverteilung von Werten messbarer Bewegungscharakteristiken während einer Dauer jedes Zyklus erzeugt, wobei die Vorrichtung eine Verarbeitungseinheit (201) umfasst, die dazu ausgelegt ist, für jeden Zyklus
diese Datenverteilung der Bewegungscharakteristiken zu bestimmen (101),
ein Maß für die zentrale Tendenz der Werte in der Datenverteilung zu berechnen (102),
ein quantifiziertes Maß für die Form der Datenverteilung über die Dauer eines jeden Zyklus zu berechnen (103), das Maß der zentralen Tendenz zu dem genannten quantifizierten Maß als einem gekoppelten Satz von Bedingungsparametern zuzuordnen (104),
wobei das System **dadurch gekennzeichnet ist, dass** es ferner dazu ausgelegt ist
einen Dispersionsgrad einer Mehrzahl von gekoppelten Sätzen von Bedingungsparametern, die der Mehrzahl von Zyklen der sich zyklisch bewegenden Komponente zugeordnet sind, zu bestimmen (105), und
den Dispersionsgrad mit einem Dispersionsschwellenwert zu vergleichen (106), oder einen Trend des Dispersionsgrades über die Zeit für diese Fehlervorhersage zu bestimmen (107).

12. Vorrichtung nach Anspruch 11, wobei die Verarbeitungseinheit dazu ausgelegt ist, das Maß der zentralen Tendenz der Werte in der Datenverteilung durch Berechnen (102') eines Mittelwertes, wie beispielsweise eines arithmetischen Mittelwertes und/oder eines geometrischen Mittelwertes und/oder eines harmonischen Mittelwertes und/oder eines verallgemeinerten Mittelwertes und/oder anderer Maße einer zentralen Tendenz der Datenverteilung, wie beispielsweise eines Durchschnittswertes oder eines Moduswertes zu berechnen.

13. Vorrichtung nach Anspruch 11 oder 12, wobei die Verarbeitungseinheit dazu ausgelegt ist, ein quantifiziertes Maß einer Form der Datenverteilung durch Berechnen (103"') eines Wölbungswertes der Datenverteilung zu berechnen.

14. Vorrichtung nach einem der Ansprüche 1 bis 13, wobei die Verarbeitungseinheit dazu ausgelegt ist, den Dispersionsgrad der Mehrzahl von gekoppelten Sätzen von Bedingungsparametern zu bestimmen, indem sie einen Bruchteil der Mehrzahl von gekoppelten Sätzen von Bedingungsparametern berechnet (105'), die innerhalb einer eingestellten Schwellendispersion enthalten sind.

15. Vorrichtung nach einem der Ansprüche 1 bis 14, wobei die Verarbeitungseinheit dazu ausgelegt ist, einen Dispersionsgrad der Mehrzahl von gekoppelten Sätzen von Bedingungsparametern durch Berechnen (105") der Abstände (202, 202') zwischen einem Zentrum (203) einer Verteilung der Mehrzahl von gekoppelten Sätzen von Bedingungsparametern und jedem gekoppelten Satz von Bedingungsparametern zu bestimmen.

## Revendications

1. Procédé (100) de prédiction de défaillance d'un composant de machine à mouvement cyclique, dans lequel chaque cycle d'une pluralité de cycles d'un mouvement du composant génère une distribution de données de valeurs de caractéristiques de mouvement mesurables pendant la durée de chaque cycle, le procédé comprenant, pour chaque cycle, les étapes suivantes :
déterminer (101) ladite distribution de données des caractéristiques de mouvement,
calculer (102) une mesure de la tendance centrale des valeurs dans la distribution de données,
calculer (103) une mesure quantifiée d'une forme de distribution de données sur la durée de chaque cycle, associer (104) la mesure de la tendance centrale à ladite mesure quantifiée de la forme comme un ensemble couplé de paramètres d'état,
le procédé étant **caractérisé par** les étapes supplémentaires comprenant de :
déterminer (105) un degré de dispersion d'une pluralité d'ensembles couplés de paramètres d'état associés à la pluralité de cycles d'un mouvement du composant à mouvement cyclique, et
comparer (106) le degré de dispersion avec une valeur seuil de dispersion, ou déterminer (107) une tendance du degré de dispersion au cours du temps, pour ladite prédiction de défaillance.

2. Procédé selon la revendication 1, dans lequel le calcul d'une mesure de tendance centrale des valeurs dans la distribution des données comprend :
le calcul (102') d'une valeur moyenne, telle qu'une moyenne arithmétique, et/ou une moyenne géométrique, et/ou une moyenne harmonique, et/ou une moyenne généralisée, et/ou d'autres mesures d'une tendance centrale de la distribution des données telle qu'une valeur médiane ou une valeur de mode.

3. Procédé selon la revendication 1 ou la revendication 2, dans lequel le calcul d'une mesure quantifiée d'une forme de ladite distribution de données comprend :
le calcul (103') d'une mesure d'une distribution des caractéristiques de mouvement mesurées autour de ladite mesure de tendance centrale.

4. Procédé selon la revendication 3, dans lequel le calcul d'une mesure d'une distribution des caractéristiques de mouvement mesurées autour de ladite mesure de tendance centrale comprend :
le calcul (103") d'une mesure de l'écart par rapport à une distribution normale standard.

5. Procédé selon l'une quelconque des revendications 1 à 4, dans lequel le calcul d'une mesure quantifiée d'une forme de ladite distribution de données comprend :
le calcul (103''') d'une valeur du kurtosis de ladite distribution de données.

6. Procédé selon l'une quelconque des revendications 1 à 5, dans lequel les caractéristiques de mouvement comprennent des données de vibration du composant à mouvement cyclique.

7. Procédé selon l'une quelconque des revendications 1 à 6, dans lequel la détermination d'un degré de dispersion de la pluralité d'ensembles couplés de paramètres d'état comprend :
la détermination (105') d'une fraction de la pluralité d'ensembles couplés de paramètres d'état contenus dans une dispersion seuil définie.

8. Procédé selon l'une quelconque des revendications 1 à 7, dans lequel la détermination d'un degré de dispersion de la pluralité d'ensembles couplés de paramètres d'état comprend :
la détermination (105") des distances (202, 202') entre le centre (203) d'une distribution de la pluralité d'ensembles couplés de paramètres d'état et chaque ensemble couplé de paramètres d'état.

9. Procédé selon l'une quelconque des revendications 1 à 8, dans lequel le degré de dispersion est déterminé en calculant (105''') l'étendue de l'intervalle interquartile (IQR, IQR') des ensembles couplés de paramètres d'état.

10. Produit programme informatique comprenant des instructions qui, lorsque le programme est exécuté par un ordinateur, amènent l'ordinateur à exécuter les étapes du procédé selon l'une quelconque des revendications 1 à 9.

11. Appareil (200) configuré pour prédire une défaillance dans un composant à mouvement cyclique, dans lequel chaque cycle d'une pluralité de cycles d'un mouvement du composant génère une distribution de données de valeurs de caractéristiques de mouvement mesurables pendant la durée de chaque cycle, l'appareil comprenant une unité de traitement (201) configurée, pour chaque cycle, pour :
déterminer (101) ladite distribution de données des caractéristiques de mouvement,
calculer (102) une mesure de la tendance centrale des valeurs dans la distribution de données,
calculer (103) une mesure quantifiée d'une forme de distribution de données sur la durée de chaque cycle, associer (104) la mesure de la tendance centrale à ladite mesure quantifiée de la forme comme un ensemble couplé de paramètres d'état,
le système étant **caractérisé en ce qu'**il est en outre configuré pour :
déterminer (105) un degré de dispersion d'une pluralité d'ensembles couplés de paramètres d'état associés à la pluralité de cycles d'un mouvement du composant à mouvement cyclique, et
comparer (106) le degré de dispersion avec une valeur seuil de dispersion, ou déterminer (107) une tendance du degré de dispersion au cours du temps, pour ladite prédiction de défaillance.

12. Appareil selon la revendication 11, dans lequel ladite unité de traitement est configurée pour calculer la mesure de tendance centrale des valeurs dans la distribution des données en calculant (102') une valeur moyenne, telle qu'une moyenne arithmétique, et/ou une moyenne géométrique, et/ou une moyenne harmonique, et/ou une moyenne généralisée, et/ou d'autres mesures d'une tendance centrale de la distribution des données telle qu'une valeur médiane ou une valeur de mode.

13. Appareil selon la revendication 11 ou la revendication 12, dans lequel ladite unité de traitement est configurée pour calculer une mesure quantifiée d'une forme de ladite distribution de données en calculant (103''') une valeur du kurtosis de ladite distribution de données.

14. Appareil selon l'une quelconque des revendications 1 à 13, dans lequel ladite unité de traitement est configurée pour déterminer le degré de dispersion de la pluralité d'ensembles couplés de paramètres d'état en calculant (105') une fraction de la pluralité d'ensembles couplés de paramètres d'état étant contenus dans une dispersion de seuil définie.

15. Appareil selon l'une quelconque des revendications 1 à 14, dans lequel ladite unité de traitement est configurée pour déterminer un degré de dispersion de la pluralité d'ensembles couplés de paramètres d'état en calculant (105'') les distances (202, 202') entre le centre (203) d'une distribution de la pluralité d'ensembles couplés de paramètres d'état et chaque ensemble couplé de paramètres d'état.
